# EUROPEAN PATENT APPLICATION

(11) **EP 4 068 024 A1**
(43) Date of publication of application: **05.10.2022**
(21) Application number: 21165565.9
(22) Date of filing: 29.03.2021
(51) Int. Cl.: G05B 23/02

(54) **OPERATOR CENTRIC SYSTEM FOR RESOLUTION OF ABNORMAL SITUATIONS IN A PLANT**

(71) Applicant: ABB Schweiz AG, 5400 Baden (CH)
(72) Inventor: ZIOBRO, Dawid, 72462 Västerås (SE); KOTRIWALA, Arzam, 68526 Ladenburg (DE); GAERTLER, Marco, 69221 Dossenheim (DE); DOPPELHAMER, Jens, 68526 Ladenburg (DE); RODRIGUEZ, Pablo, 68549 Ilvesheim (DE); BERNING, Matthias, 67549 Worms (DE); KLOEPPER, Benjamin, 68199 Mannheim (DE); BORRISON, Reuben, 68775 Ketsch (DE); DIX, Marcel, 68167 Mannheim (DE); SCHMIDT, Benedikt, 69117 Heidelberg (DE); ABUKWAIK, Hadil, 69469 Weinheim (DE); LINGE, Simon, 72356 Västerås (SE); MACZEY, Sylvia, 69493 Hirschberg (DE); SHARMA, Divyasheel, 560048 Bangalore (IN); K R, Chandrika, 560078 Bangalore (IN); GOPALAKRISHNAN, Gayathri, 17171 Solna (SE)
(74) Representative: Maiwald Patent- und Rechtsanwaltsgesellschaft mbH

(57) **Abstract**

The invention relates to the field of industrial plants and/or industrial processes, particularly the a system for diagnosis and assistance in the plants, which comprise components of the plant. The assistance system (100) comprises a plant topology repository (110), comprising the components of the plant and relations between the components; a monitoring subsystem (120), configured for monitoring signals from the components and for monitoring a related event, as a key for the monitored signals; an aggregation subsystem (130), configured for storing a plurality of the monitored signals and the related events, wherein at least one of the events is the abnormal situation; an identification subsystem (140), configured for comparing currently monitored signals to stored monitored signals and the related event; and an evaluation subsystem (150), configured for outputting a predefined action, if the currently monitored signals match to the event that is the abnormal situation.

## Description

### Field of the Invention

The invention relates to the field of industrial plants and/or industrial processes, particularly for diagnosis and assistance in the plants. The invention further relates to a method, a use, a program element, and to a computer-readable storage medium.

### Background

In industrial plants and/or industrial processes that exceed a small size, the operations of their components may be quite complex. Hence, recognizing an abnormal situation and an adequate reaction on such a situation may be a difficult task, e.g. for service personnel. Therefore, assistance for recognizing an abnormal situation and reacting on it may be helpful.

### Description

It is an objective of the invention to provide an assistance system for an industrial plant. This objective is achieved by the subject-matter of the independent claims. Further embodiments are evident from the dependent claims and the following description.

One aspect relates to an assistance system for analysing an abnormal situation in an industrial plant, which comprises components of the plant. The assistance system comprises a plant topology repository, comprising the components of the plant and relations between the components; a monitoring subsystem, configured for monitoring signals from the components and for monitoring (and/or capturing, storing, recording) a related event, as a key for the monitored signals; an aggregation subsystem, configured for storing a plurality of the monitored signals and the related events, wherein at least one of the events is the abnormal situation; an identification subsystem, configured for comparing currently monitored signals to stored monitored signals and the (or: their) related event; and an evaluation subsystem, configured for outputting a predefined action, if the currently monitored signals match to the event that is the abnormal situation.

The assistance system may run on any computing platform. The assistance system may comprise special hardware and/or software parts, e.g. graphic acceleration machines, an FPGA (Field-Programmable Gate Array), an ANN (Artificial Neural Net), and/or other parts. The industrial plant may also be named as a system, a process, a plurality of subsystems, etc. The industrial plant, system or process may comprise a plurality of components, for instance one or more of a vessel, a valve, a motor, a heater, a control element, a pump, gearbox, separator, and/or further components. Components may comprise one or more sub-components and/or subsystems. The abnormal situation may be any situation of the plant, which is of interest to any person of the service personnel, the operator, the manufacturer, and/or for any stakeholder of the plant. Abnormal situation may comprise safety-critical situations, situations of particularly high or low energy consumption, of particularly high or low output, and/or situations with particularly "positive" or "negative" connotation, e.g. situations in which the plant or process is run particularly efficiently or also dangerous situations and/or situations that require attention, maintenance, and/or any other action.

The plant topology repository may comprise topology information. The plant topology repository may be a graphically and/or textually representable, e.g. by a graphical editor, a description language, e.g. XML (Extensible Markup Language), HTML (Hyper-Text Markup Language), a proprietary description language, and/or by further formats. The components may carry attributes, e.g. geometrical, mechanical, electrical, and/or other attributes. The relations may comprise functional and/or other relations of any kind; examples may comprise "100 W in heater A increase the temperature in vessel B for 1.2 degrees", or "on-signal of control element C opens valve D", etc.

The signals from the components may be any signal accessible from this component. Examples may comprise a current, an internal state that is accessible via a component's pin, a temperature, a flow, an audio and/or video signal from this component, a combination of signals, and/or a sequence of signal(s). The input data sources may describe a state of the system. The input data sources may be unified, e.g. by a special architecture, and be "wrapped" around existing and established data storage systems. The event may be an alarm, a critical situation, a situation of particularly high or low energy consumption, of particularly high or low output, a situation with particularly "positive" or "negative" connotation, and/or any situation that is considered as "interesting". The event may be attributed with a number, e.g. with a degree of severity or criticality (e.g. of an alarm), a KPI (Key Performance Indicator), or another attribute and/or "judgment" of the situation. Hence, the monitoring subsystem may comprise sensors of any kind, e.g. for current, temperature, noise (microphone), pictures of videos (camera), etc. The (individual) components and/or subsystems may create stand-alone views, and/or combined of pre-processed annotations and/or models, whose signals may be sensed together with the "direct" captions. Reference and enhance views, and/or and annotations from other components and subsystems may be added. The event may be a "name" or "key" for the monitored signals. An example may comprise events like "Overheating of E", "Slightly decreased flow in F", "Malfunction of valve G", "Temperature greater than 100°C in boiler H", etc. The event may comprise a combination of signals, and/or a sequence of signal(s), which have led to this (e.g.) alarm.

The aggregation subsystem may store a plurality of the monitored signals and the related events. The abnormal situation may be a selected event. The aggregation subsystem may be designed for dealing with a plurality of abnormal situations. The storing may include one or multiple models or databases with references for their lookups. Additional stateful information may be generated (e.g. "on the fly") and needs to be persisted (e.g. later on) for efficiency and reliability. Thus, the resulting plurality of events may be a list of identified and selected actions, their outcome and feedback provided by humans and other systems.

The identification subsystem may compare currently monitored signals to the list of stored monitored signals and the related event. Based on this, the identification subsystem may identify if one of the stored events matches to the currently monitored signals, and to which one. Particularly, if the currently monitored signals match to the abnormal situation, i.e. the predefined situation of interest.

In cases when the currently monitored signals match to the event that is the abnormal situation, the evaluation subsystem outputs a predefined action. The evaluation subsystem may, additionally, be configured for evaluating - e.g. aggregating, prioritizing, cross-checking (e.g. with values and/or decisions of the past) - the results of the identification subsystem.

Hence, the assistance system may advantageously contribute to identify an abnormal situation and may assist in reacting on this identified abnormal situation. Furthermore, because the assistance system may recognize the abnormal situation, it may help to avoid "over-information", e.g. by setting no alarm of any kind in a normal situation that does not require any particular attention, thus disburdening the service personnel and helping them to concentrate on relevant situations. This is particularly advantageous, because recognizing abnormal situations in complex industrial plants and/or industrial processes may be a challenging task for the experts involved. Since data orchestration and federation is already a challenging task in the case of homogenous data sources and applications with a common governance structure, this may be even more difficult for plants and industrial facilities, where a large bunch of different sources and systems exist. Moreover, at least some of them may be designed for automated operation with limited overhead capacities. The assistance systems may contribute to help human operators to extract relevant information from this large landscape of information. The assistance system may be "wrapped" around existing and established data storage systems with minimal overhead.

The assistance systems may, further, comprise optional caching and/or replication to serve data-intensive applications on the one side, while customizing state-of-the-art data storage systems for support applications in an industrial context.

In various embodiments, the signals comprise current, temperature, video, noise and other audio, annotations, and/or further loggable signals of the components, and/or the events comprise alarms, named situations, quality measures, and/or further key performance indicators, KPIs. To some extend, any named situations may be stored as "events", e.g. as a key some signal-patterns. This may contribute to a high flexibility and adaptability of the assistance system.

In some embodiments, the monitored signals and/or the related events are monitored by means of an Open Platform Communications Unified Architecture, OPC UA. This may advantageously contribute to extract relevant information from a large "landscape" of different data sources and formats. This may comprise that al some components may be internally composed of several (sub)components or subsystems that each may require specific data and/or may interact with third party services. The assistance system's data storage system, thus, may act as a unifier of different data sources, and as a focus that may help to concentrate on relevant data. On the other side, it may hide "unnecessary" or "not relevant" data (i.e. in some contexts), and may further provide a kind of global index for data tracing and to reference contexts and situations.

In various embodiments, the plant topology repository is a piping and instrumentation diagram, P&ID, and/or uses a P&ID semantic. The P&ID may be displayed graphically and/or by textual means.

In some embodiments, the predefined action comprises to highlight the components involved in the abnormal situation. For instance, in case of a graphically displayed P&ID, the components involved, the root-cause and all intermediate events that may have led to the alarm/anomaly of interest may be identified and highlighted on a screen, thus functioning as a topological root cause analyser.

In some embodiments, the predefined action comprises to display the signals involved in the abnormal situation. This may comprise timing diagrams of signals, audio and/or video records, and/or further information of interest. This may be combined with and/or embedded in the P&ID, for instance by "clicking" on a component.

In various embodiments, the predefined action comprises at least one of:
switching on or off at least one of the components;
changing a control element and/or a control variable of at least one of the components; ordering a maintenance and/or a repair of at least one of the components;
changing alarm limits for/of at least one of the components;
and/or further actions.

In various embodiments, the predefined action is attributed with a confidence score, an amount of executions, and/or a quality measure. Based on this, the service personnel may faster and/or easier decide which one of the solution strategies to take. Furthermore, the confidence score may be changed and/or the quality measure of the predefined action is evaluated and optionally stored, e.g. by different design of some parts of the plants and/or based on experience when running the plant.

In some embodiments, the assistance system further comprises a simulator, configured for simulating effects of the predefined action. This "What-If Simulator" may advantageously enable users to simulate actions and foresee consequences before actually implementing an action.

In some embodiments, the assistance system further comprises an event annotation system, configured for annotate textual, graphical, and/or other kind of notes to an event. This "Event Notebook" may be implemented as a "canvas", which may be populated with interesting analytical notes, snapshots or other graphical elements that are visualized as part of the DCS (Distributed Control System).

In some embodiments, the assistance system further comprises an event journal, configured for storing dependencies between at least two components and/or their signals. For instance, alarms and other events of significance may be presented on a timeline. Dependencies between nodes may be visualized with graphical lines, thus decreasing the service personnel's cognitive workload of perceiving cause and effect relationships.

In some embodiments, the assistance system further comprises a knowledge extractor, configured for searching information about the components. The information may comprise, e.g., technical details, such as type, year of manufacturing, power consumption, and/or component specifics, like maximum flow of pumps or valves. This "Knowledge Extractor" may be implemented as a unified search interface that enables users to find relevant information from across multiple data sources.

In some embodiments, the identification subsystem comprises an ANN-based (ANN: artificial neural net) matching engine, configured for comparing and/or matching currently monitored signals to stored monitored signals and the (or their) related events. The ANN may, further, contribute to a "pre-section" or "compression" of the data to be compared (and/or inspected for comparison), thus improving the performance of the assistance system.

An aspect relates to a use of an assistance system as described above and/or below for detecting and/or for analysing an event and/or an abnormal situation in an industrial plant.

An aspect relates to a method for outputting a predefined action in reaction of an abnormal situation in an industrial plant, the method comprising the steps of:
monitoring signals, from components of the industrial plant, and monitoring (or otherwise capturing) a related event, as a key for the related monitored signals;
storing a plurality of the monitored signals and the related events, wherein at least one of the events is the abnormal situation;
comparing currently monitored signals to stored monitored signals and the related event; and
outputting a predefined action, if the currently monitored signals match to the event that is the abnormal situation.

An aspect relates to a program element for executing the method described above and/or below, when running the program element on a processing unit of an assistance system as described above and/or below.

An aspect relates to a computer-readable storage medium where a computer program or a computer program product as described above is stored on.

An aspect relates to a method for training an artificial neural net, ANN, for comparing currently monitored signals to stored monitored signals and a related event, the method comprising the steps of:
selecting a set of components of an industrial plant and stored signals from the components;
for each event, using a sequence of stored signals and an evaluation-value as an input for the ANN; and
when a predefined positive matching-criterion for the event is exceeded and/or a predefined negative matching-criterion is underrun, stopping the training.

### Brief Description of the Drawings

The drawings depict:
- **Fig. 1**: schematically an assistance system according to an embodiment;
- **Fig. 2**: a flow diagram according to an embodiment;
- **Fig. 3**: a flow for an Action Recommender according to an embodiment;
- **Fig. 4**: an example of a flow and generation of data according to an embodiment;
- **Fig. 5**: a exemplary workflow of a use case according to an embodiment;
- **Fig. 6**: a partial visualization of a 6-part system according to an embodiment.

### Detailed Description of Embodiments

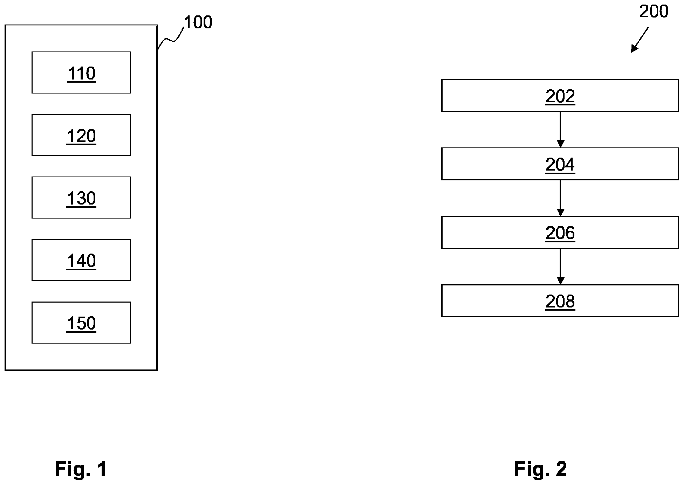

**Fig. 1** shows schematically an assistance system 100 for analysing an abnormal situation in an industrial plant. The industrial plant, system or process comprises components of the plant, for instance one or more of a vessel, a valve, a motor, a heater, a control element, and/or further components. The assistance system 100 comprises a plant topology repository 110. The plant topology repository 110 holds and/or displays the components of the plant and relations between the components. The assistance system 100 further comprises a monitoring subsystem 120, configured for monitoring signals from the components and for monitoring a related event. The event may function as a key for the monitored signals.

The assistance system 100 further comprises an aggregation subsystem 130, which is configured for storing a plurality of the monitored signals and the related events. At least one of the events is the abnormal situation. The assistance system 100 further comprises an identification subsystem 140. The identification subsystem 140 uses currently monitored signals and compares them to stored monitored signals and the related event. The comparing may be done by a pattern matching machine, where the signals are stored, e.g., as a sequence of a plurality of signals of a predefined length. As an example, an event "Overheating of E" may comprise signals of a duration of 17 minutes showing signals (sometimes called "states") from a valve, e.g. its degree of opening, a heater, e.g. its current, and a vessel E, e.g. its temperature, possibly compared to a critical temperature. Additionally or as an alternative, the comparing may be done by an ANN, which is trained for this situation. The training may be performed by inputting several sequences labelled "Overheating of vessel E" and other sequences labelled "normal".

The assistance system 100 further comprises an evaluation subsystem 150. The evaluation subsystem 150 may recognise a critical situation, e.g. the above example "Overheating of E". If the currently monitored signals match to the event that is the abnormal situation (e.g. of this example), the evaluation subsystem 150 may, based on this, output a predefined action, e.g. a message "adding fluid by opening second valve". The predefined action may comprise a confidence level, e.g. "75 %". Additionally or as an alternative, further actions may be taken, e.g. displaying an infrared picture of vessel E.

**Fig. 2** shows a flow diagram 200 according to an embodiment. In a step 202, signals from components of the industrial plant are monitored. In parallel to this, a related event is monitored (or sensed otherwise), which may function as a key for the related monitored signals. Then, the monitored signals can be accessed by the name of this event. The event may be any situation of interest within the plant. In a step 204, a plurality of the monitored signals and the related events is stored, wherein at least one of the events is the abnormal situation. For instance, the abnormal situation "Overheating of E" can, then, be accessed by its name and/or by matched by the stored sequence of signals. In a step 206, currently monitored signals are compared to stored monitored signals and the related event. The comparison means may be algorithmic means, an ANN, and/or further means. In a step 208, a predefined action is output, if the currently monitored signals match to the event that is the abnormal situation. Taking the above example, the predefined action may be a message "adding fluid by opening second valve; confidence level: 75 %".

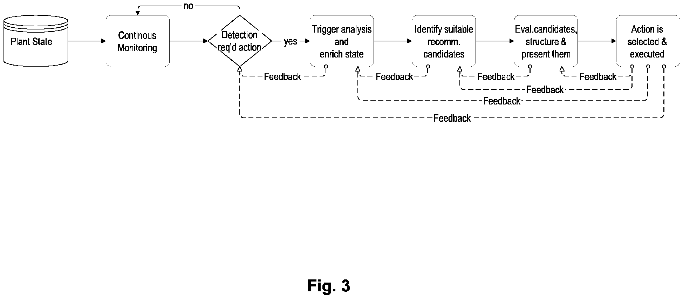

**Fig. 3** shows a flow for an Action Recommender according to an embodiment. This figure illustrates the situation for a fully automated system, i.e. when the system triggers all necessary steps from monitoring to presentation on its own. The system may foresee that users are able to opt-in at the different stages and, then, directly trigger the chain from there. The system and method comprises three high-level aspects:
1. Abstraction of input state: The aggregation and abstraction of individual information from subsystems of the plant or industrial setup, such as, but not limited to, signals, alarms, events, quality and system KPIs, logs and topology information.
2. Storage for stage-specific information: Each stage may use one or multiple models or databases with references for their lookups. Additional stateful information may be generated - e.g. "on the fly" - and may be persisted for efficiency and reliability.
3. Results: The list of identified and selected actions, their outcome and feedback provided by humans and other systems.

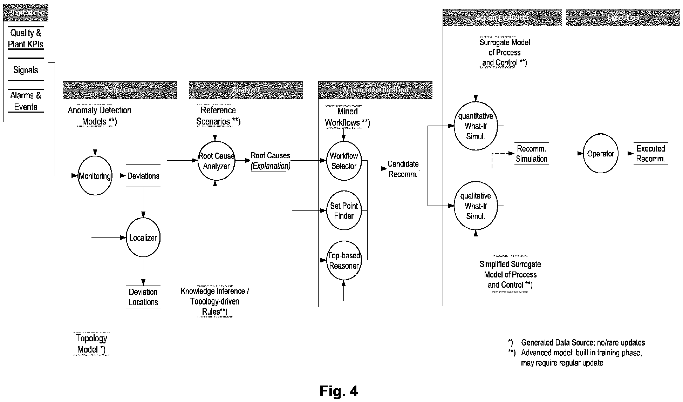

**Fig. 4** shows an example of a flow and generation of data between different stages according to an embodiment, with detailed subsystems for the individual stages.

A first aspect of **Fig. 4** is an abstraction of the input state. Plants and similar industrial facilities may consist of many different subsystems that collect and store data. An assistance system or recommendation system has advantageously access to live data, which may be called "signals" (because they can be sensed like - or as - electrical signals). These "signals", for example, may continuously monitor state(s) of one or more components. The assistance system or recommendation system may react accordingly (e.g. by outputting a recommendation and/or another predefined action). The assistance system may further be able to access historic states, for example in the evaluation of action to predict its usefulness. In some embodiments, the system may access a consistent, connected, integrated and reliable view of the plant, e.g. by using an OPC UA architecture.

For a process plant, examples of data sources ("signals") representing its state may be electrical, acoustical and/or other sensed signals, and/or logs. They may comprise "evaluations", such as alarms, events, quality and system KPIs. Furthermore, topology and engineering information may be used to link individual items to build a meaningful context. At least some of these sources are digital and can be accessed via interfaces of general standards such as OPC UA. The assistance system may be based upon these interfaces and may provide ways to define and contextualize the plant state. Custom models build by recommendation systems, such as a topology understanding, may be used as interfaces to enhance and customize the system's outcome and/or its context. An implementation may, e.g., use a light-weighted wrapper around existing interfaces with a delegation and federation pattern in its simplest form. More advanced forms may, for example, support high-volume crawling of historic states use state-of-the-art storage systems to replicate and aggregate data from these sources.

A second aspect of **Fig. 4** is the so-called "Storage for Stage-Specific Information". Such an assistance or recommender system may comprise several subsystems or components that are associated with the different stages, as depicted in **Fig. 4****.** Each of the stages may be specialized to gather, derive and enhance the current view. Additionally or as an alternative, the components may build their own models or collection of references in order to perform their task more efficiently. For this, two modes of operation may be foreseen. The first mode may be called "interface mode", where components themselves takes care of the data management. Here, like in the abstraction of the input state, a proper interface to access the data may be used in order to provide a unifying wrapper for the consistent view. Due to potential interactions with other components and the following aspect of results and feedback, a consistent and long-term available referencing mechanism may be used. The second mode may be called "delegation mode", where a (central) data storage system may take care of the management. Here, the generation of ID and references is automatically done, so that the component may delegate the data and queries to that system. Such as system may be realized with readily available storage systems.

A third aspect of **Fig. 4** is considers the use of the provided recommendations, their usefulness, triggers and feedback from users. One implementation of an assistance system or recommendation system may have means to monitor their performance and adjust their output accordingly. Another source of information may be an interaction with (human) users that can provide valuable insight into intermediate and the overall results. Neglecting these insights may lead to quality degradation and even rejection of the recommendation system by the users, whereas integrating these feedbacks may advantageously lead to better acceptance and improvement of the overall system. Hence, information on presented recommendations may be gathered and, by this way, be provided as a method to derive (via monitoring of state and actions) the usefulness and/or confidence of a selected action. The information may be stored in readily available data storage systems. This may then be used for updating models and/or for building reference systems by individual system parts. Furthermore, feedback by users and other manual interaction (with the recommendation system) may be collected, stored, and/or used by the system. The information may, e.g., be linked to the view in the component or the predefined action of the assistance system. Hence, the design of the system may allow to build complete data traces. A feedback from the users may, thus, not only be processed by the component it was given to, but also propagated to other, e.g. previous, components with automatic inference of their used reference view. The realization may be done in an interface or a delegation way.

The advantages comprise not only to cope with homogenous data sources and application with a common governance structure. In addition, al some plants and industrial facilities may use a large bunch of different sources and systems and most of them only designed for the automated operation with limited overhead capacities. Applications like recommendation or assistance systems for human operators face the challenge to extract relevant information from this large landscape while being internally composed of several components or subsystems that themselves require specific data and interact with third party services. This assistance system, however, may also serve as a unifier of different data sources, a focus that emphasizes relevant data and hides unnecessary data and a global index for data tracing and to reference contexts and situations all at once. Additionally, this solution may be "wrapped" around existing and established data storage systems with minimal overhead and optional caching and/or replication to serve data-intensive applications on the one side, while customizing state-of-the-art data storage systems for support applications in an industrial context.

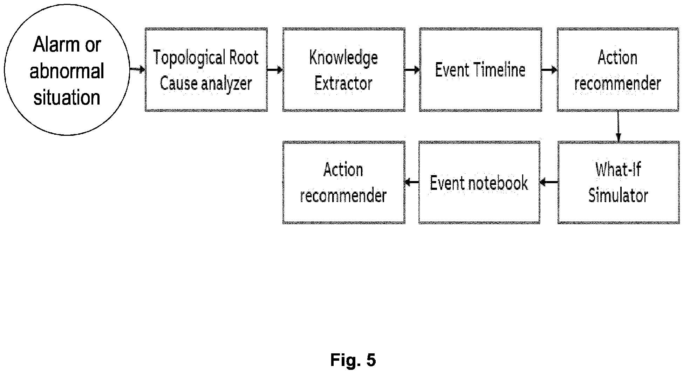

**Fig. 5** shows a exemplary workflow of a use case according to an embodiment. It should be noted that the components sketched in **Fig. 5** may comprise further connections among each other. Also, they need not to be used in a serial way; for instance, "back-arrows" and loops may occur when using these components.

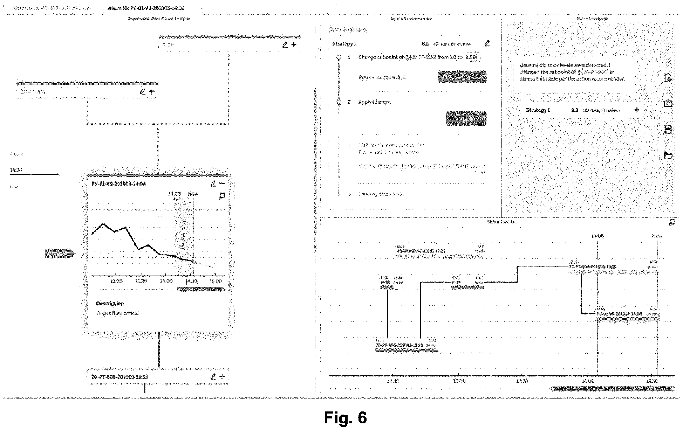

**Fig. 6** shows a partial visualization of a 6-part system according to an embodiment. The system (toolkit) shown in **Fig. 5** and **Fig. 6** encompasses following parts:
1. Topological Root Cause Analyzer: In the event of an alarm or anomaly the analyzer may identify the root-cause and all intermediate events that may have led to the alarm and/or anomaly of interest. This may comprise an identification of a root-cause and at least some (possibly all) intermediate events for example, alarms, repair logs or other events of interest, that may have led to the alarm/anomaly of interest. This may also comprise an identification of future events that may occur unless the anomaly of interest is resolved, and/or which may occur when taking one of the recommended action(s). Additionally, a coherent visualization and interaction metaphors of anomaly of interest, of causal events and predicted events may be provided and, further, representation and separation of anomaly of interest, future events and cause events. Additional features that enable data transfer from one tool to another may, e.g., comprise: "Pop out", "Add to Event Notebook", "Expand and Collapse" functionalities.
2. Action Recommender: This offers potential solution strategies each containing information like confidence score, amount of executions and user reviews. Each strategy contains multiple listed steps. While this embodiment focuses on stepwise execution of the steps, other variants such as simultaneous execution of multiple steps is also to be protected. This may comprise an identification of at least some appropriate solutions that may assist user to resolve alarm/anomaly of interest. Besides, definition of multiple strategies each of which provides a series of actions that may contributea to problem resolution. Each strategy contains descriptive elements such as summary, reviews, number of past runs, confidence score etc. Some strategies may comprise multiple interactive elements which allow interaction and access to connected systems/tools. This enables representation of ranked and ordered solutions strategies using a list, each list item containing a potential solution. Within actions, the system proposes suitable values that may be applied directly or may be adjusted by a user. Furthermore, functionalities "node ID", "See reviews", "Activate", and/or "Simulate Change" are provided. An indicator may be provided that illustrates action steps, e.g. "completed", "ongoing", and/or "next" actions. Reviews and a score for the solution strategy may be added, after execution of the predefined or recommended action.
3. What-If Simulator: The what-If simulator enables users to simulate an action and foresee its consequences before actually implementing an action. It gives information of how a specific parameter and other dependent parameters would be affected. A trend prediction for when a chosen parameter is altered. A trend prediction of other parameters related to or dependent on the chosen parameter may be offered.
4. Event Notebook: It is a canvas that can be populated with interesting analytical notes, snapshots or other graphical elements that are visualized as part of the DCS. User can click on appropriate icon or button that may be accessible from various parts of the interface. The notebook may be saved and reused manually or algorithmically. The Event Notebook canvas may be populated with notes, screenshots or copies of graphical elements associated with an anomaly of interest. The Event Notebook may support functionalities like "New note", "Add to notebook", "Take screenshots", "Save to notebook", "Browser notebooks". Visual Representation may be provided using interactive graphical and textual elements, including a moving of graphical elements within the Event Notebook canvas.
5. Event Timeline: It enable users to see the anomaly of interest and all intermediate events that may have led to the anomaly on a timeline. Dependencies between events are visualized, decreasing the cognitive workload of perceiving cause and effect relationships. Events or alarms of significance that are not directly related to anomaly of interest are also presented on the timeline, but without any dependency indication. The timeline can be navigated using a horizontal scrollbar. The granularity of the timeline can be adjusted using the zoom handles on the navigation bar. This provides means for a timeline-based visualization of root-cause and intermediate events, that may have led to the alarm/anomaly of interest. A representation of relation between events may be integrated. A timeline-based visualization of independent events to the alarm/anomaly of interest may, further, be provided. This may support identification and/or visualization of time when the alarm/anomaly of interest occurred as well as its duration.
6. Knowledge Extractor: This may be used as a search tool that enables searching across multiple databases. It may be capable of using text, trends or other visual snippets, e.g. of a table or a P&ID diagram as input. Results may be presented in a way that enables pattern finding, commenting and comparison. The results may be presented as overlays of visual search results. The presentation of the search results may allow pattern finding in events and search hits.

This approach may lead to advantages like Less time spent on problem solving, easy to use workspace making access to vital informant quicker, faster resolution of operational issues and less undesired side effects, thus leading to lower cognitive load of, e.g., service personnel, which is required during problems analysis and decision making, thus freeing up mental capacity for other tasks.

## Claims

1. An assistance system (100) for analysing an abnormal situation in an industrial plant, which comprises components of the plant, the assistance system (100) comprising:
a plant topology repository (110), comprising the components of the plant and relations between the components;
a monitoring subsystem (120), configured for monitoring signals from the components and for monitoring a related event, as a key for the monitored signals;
an aggregation subsystem (130), configured for storing a plurality of the monitored signals and the related events, wherein at least one of the events is the abnormal situation;
an identification subsystem (140), configured for comparing currently monitored signals to stored monitored signals and the related events; and
an evaluation subsystem (150), configured for outputting a predefined action, if the currently monitored signals match to the event that is the abnormal situation.

2. The assistance system (100) of claim 1,
wherein the signals comprise current, temperature, audio, video, annotations, and/or further loggable signals of the components, and/or
the events comprise alarms, named situations, quality measures, and/or further key performance indicators, KPIs.

3. The assistance system (100) of claim 2,
wherein the monitored signals and/or the related events are monitored by means of an Open Platform Communications Unified Architecture, OPC UA.

4. The assistance system (100) of any one of the preceding claims,
wherein the plant topology repository (110) is a piping and instrumentation diagram, P&ID, and/or uses a P&ID semantic.

5. The assistance system (100) of any one of the preceding claims,
wherein the predefined action comprises to highlight the components involved in the abnormal situation.

6. The assistance system (100) of any one of the preceding claims,
wherein the predefined action comprises to display the signals involved in the abnormal situation.

7. The assistance system (100) of any one of the preceding claims, wherein the predefined action comprises at least one of:
switching on or off at least one of the components;
changing a control element and/or a control variable of at least one of the components;
ordering a maintenance and/or a repair of at least one of the components;
changing alarm limits for of at least one of the components;
and/or further actions.

8. The assistance system (100) of any one of the preceding claims,
wherein the predefined action is attributed with a confidence score, an amount of executions, and/or a quality measure.

9. The assistance system (100) of any one of the preceding claims, further comprising a simulator, configured for simulating effects of the predefined action.

10. The assistance system (100) of any one of the preceding claims, further comprising an event annotation system, configured for annotate textual, graphical, and/or other kind of notes to an event.

11. The assistance system (100) of any one of the preceding claims, further comprising an event journal, configured for storing dependencies between at least two components and/or their signals.

12. The assistance system (100) of any one of the preceding claims, further comprising a knowledge extractor, configured for searching information about the components.

13. The assistance system (100) of any one of the preceding claims,
wherein the identification subsystem (140) comprises an artificial neural net, ANN, based matching engine, configured for comparing currently monitored signals to stored monitored signals and the related events.

14. A use of an assistance system (100) according to any one of the preceding claims for detecting and/or for analysing an event and/or an abnormal situation in an industrial plant.

15. A method for outputting a predefined action in reaction of an abnormal situation in an industrial plant, the method comprising the steps of:
monitoring signals, from components of the industrial plant, and monitoring a related event, as a key for the related monitored signals;
storing a plurality of the monitored signals and the related events, wherein at least one of the events is the abnormal situation;
comparing currently monitored signals to stored monitored signals and the related event; and
outputting a predefined action, if the currently monitored signals match to the event that is the abnormal situation.

16. A program element for executing the method of the preceding claim, when running the program element on a processing unit of an assistance system (100) according to any one of the claims 1 to 14.

17. A computer-readable storage medium where a computer program according to the preceding claim is stored on.

18. A method for training an artificial neural net, ANN, for comparing currently monitored signals to stored monitored signals and a related event, the method comprising the steps of:
selecting a set of components of an industrial plant and stored signals from the components;
for each event, using a sequence of stored signals and an evaluation-value as an input for the ANN; and
when a predefined positive matching-criterion for the event is exceeded and/or a predefined negative matching-criterion is underrun, stopping the training.
